# NEUE EUROPÄISCHE PATENTSCHRIFT

(11) **EP 2 729 750 B2**
(45) Veröffentlichungstag und Bekanntmachung des Hinweises auf die Entscheidung über den Einspruch: **23.03.2022**
(45) Hinweis auf die Patenterteilung: 09.12.2015
(21) Anmeldenummer: 12759346.5
(22) Anmeldetag: 04.07.2012
(51) Int. Cl.: F28D 1/02, F28F 9/02, F28F 9/26, F28F 21/06, F28D 1/053

(54) **WÄRMETAUSCHERANORDNUNG**
HEAT EXCHANGER ARRANGEMENT
SYSTÈME ÉCHANGEUR DE CHALEUR

(30) Priorität: 05.07.2011 DE 102011106558
(43) Veröffentlichungstag der Anmeldung: 14.05.2014
(73) Patentinhaber: Rühland, Lothar, 38176 Wendeburg (DE)
(72) Erfinder: Rühland, Lothar, 38176 Wendeburg (DE)
(74) Vertreter: Lins, Edgar
(86) Internationale Anmeldenummer: PCT/DE2012/000666
(87) Internationale Veröffentlichungsnummer: WO 2013/004211

(56) Entgegenhaltungen:
- AU-A- 4 054 078
- DE-A1-102005 048 838
- US-A- 3 396 785

## Beschreibung

Die Erfindung betrifft eine Wärmetauscheranordnung mit in einem Modul parallel mit Abstand zueinander angeordneten, von einem Fluid durchströmbaren Rohren, die zwischen zwei ebenfalls von dem Fluid durchströmbaren transversalen Sammelrohren verlaufen, wobei wenigstens eines der Sammelrohre wenigstens einen Anschluss für einen Zulauf oder Ablauf des Fluids aufweist und das Modul zum Durchströmen von einem quer zu seiner Fläche durch den Abstand der Rohre zueinander vorbeistreichenden äußeren Fluid ausgebildet ist. Eine ähnliche Wärmetauscheranordnung ist aus der US 3 396 785 bekannt.

Eine derartige gattungsgemäße Wärmetauscheranordnung ist aus der DE 2 427 715 A1 bekannt.

Wärmetauscheranordnungen dieser Art sind in zahlreichen Ausführungsformen und zu zahlreichen Anwendungszwecken bekannt.

So sind beispielsweise Heizkörperanordnungen bekannt, die aus parallel zueinander mit Warmwasser durchströmten Rohren bestehen, die von einem - beispielsweise quadratischen - Sammelrohr zu einem anderen - beispielsweise ebenfalls quadratischen - Sammelrohr verlaufen. Dabei können das eine Sammelrohr mit dem Warmwasserzulauf und das andere Sammelrohr mit dem Warmwasserrücklauf verbunden sein. Derartige Heizkörper eignen sich als Handtuchtrockner, weil feuchte Handtücher in den Abstand zwischen zwei Rohren eingeschoben werden können und so in einem großflächigen Kontakt mit einer größeren Anzahl von Rohren getrocknet werden. Die Herstellung derartiger Heizkörper geschieht regelmäßig durch eine Schweißverbindung zwischen den parallelen Rohren und den Sammelrohren. Diese Heizkörper bestehen aus Metall.

Wärmetauscheranordnungen dieser Art sind ferner als Sonnenkollektoren bekannt, wenn sie aus einem schwarzen, Wärmestrahlung absorbierenden Material gebildet sind. Sie können dann als entsprechende Module auf ein Dach gelegt werden, beispielsweise um durchfließendes Wasser während einer Sonneneinstrahlung zu erwärmen.

Es sind weitere Anwendungen in Betracht gezogen worden, bei denen durch die Rohre Kältemittel fließt, die der die Wärmetauscheranordnung umgebenden Luft Wärme entzieht und an anderer Stelle, beispielsweise über einen Phasenumwandlungsprozess, die absorbierte Energie wieder zur Verfügung stellen.

Ein generelles Problem derartiger Wärmetauscheranordnungen besteht darin, dass ihre Herstellung aufgrund der Herstellung der Verbindung zwischen den parallelen Rohren und den Sammelrohren, die regelmäßig durch Schweißen erfolgt, sehr aufwändig herzustellen sind. Der daraus resultierende hohe Verkaufspreis steht einer weiten Verbreitung derartiger Wärmetauscheranordnungen entgegen.

Der Erfindung liegt daher die Aufgabe zugrunde, einen Weg für eine preiswerte Herstellung der Wärmetauscheranordnung der eingangs erwähnten Art anzugeben.

Zur Lösung dieser Aufgabe ist erfindungsgemäß eine Wärmetauscheranordnung der eingangs erwähnten Art dadurch gekennzeichnet, dass das Modul als ein einstückig im Rotationsformverfahren hergestelltes Kunststoffteil ausgebildet ist.

Die erfindungsgemäße Wärmetauscheranordnung nimmt somit die gegenüber Wärmetauscheranordnungen aus Metall etwas schlechtere Wärmeleitung zwischen dem Fluid innerhalb der Rohre und dem die Rohre umgebenden Fluid durch die Herstellung aus Kunststoff in Kauf. Allerdings sind die üblichen Herstellungsverfahren für Kunststoffteile nicht dafür vorgesehen, kompliziert aufgebaute Teile, wie eine gattungsgemäße Wärmetauscheranordnung herzustellen. Kunststoffrohre werden üblicherweise im Extrusionsverfahren hergestellt, das somit nur für die Herstellung der Einzelteile des Moduls geeignet ist. Für ein Spritzgießen eignet sich eine gattungsgemäße Wärmetauscheranordnung ebenfalls nicht, weil zusätzlich zu den die äußere Kontur festlegenden Werkzeughälften senkrecht zur Entformungsrichtung der Formhälften bewegbare Kerne verwendet werden müssten, für deren Bewegung allerdings wegen der Sammelrohre kein Platz zur Verfügung steht. US 3,396,785 offenbart eine Herstellung einer Wärmetauscheranordnung aus Teilmodulen, die aus jeweils zwei durchströmbaren Rohren und einem Teilabschnitt der Sammelrohre bestehen und im Spritzgießverfahren hergestellt und zu der Wärmetauscheranordnung zusammengesetzt werden. Die für die Rohre benötigten Kerne müssen nach dem Spritzgießvorgang gezogen werden, wofür in der Mantelwandung des jeweiligen Sammelrohrabschnitts jeweils eine Öffnung verbleiben muss, die jeweils mit einem Stopfen verschlossen werden müssen, damit eine funktionsfähige Wärmetauscheranordnung vorliegt.

Die erfindungsgemäße einstückige Herstellung des Moduls gelingt überraschenderweise durch Anwendung des Rotationsformens. Das Rotationsformen von Kunststoffteilen geschieht mit Hilfe zweier Formhälften, die zu einer geschlossenen Form miteinander verbunden werden und einen geschlossenen Hohlraum aufweisen. In den Hohlraum wird ein pulverförmiger Kunststoff eingebracht und durch Wärmeeinwirkung plastifiziert, woraufhin die Form in allen Raumrichtungen langsam rotiert, sodass sich der thermoplastische Kunststoff unter Einfluss der Erdanziehung durch die Rotationsbewegung auf der Innenwand der Form verteilt und aufgrund der Kühlung der Form aushärtet. Auf diese Weise bildet sich eine ausgehärtete Wandstärke, deren Gleichmäßigkeit durch die vorgegebene Rotationsbewegung der Form gewährleistet werden kann. Dieses Rotationsformen ist somit für großflächige Hohlkörper bekannt. Erfindungsgemäß wird das Rotationsformen nunmehr verwendet, um eine kompliziert aufgebautes Modul einstückig herzustellen, sodass eine jegliche Verbindung zwischen Kunststoff-Einzelteilen entfallen kann. Die komplizierte Struktur der erfindungsgemäß einstückig hergestellten Wärmetauscheranordnung ergibt sich daraus, dass die Vielzahl von vorzugsweise in einer Ebene zueinander parallel angeordneten Rohren wenigstens fünf, insbesondere wenigstens acht, insbesondere wenigstens zehn und bevorzugt wenigstens zwölf beträgt. In einer bevorzugten Ausführungsform der Erfindung liegt die Anzahl der vorzugsweise in einer Ebene parallel zueinander angeordneten Rohre zwischen zwanzig und dreißig. Die Außenabmessungen der Rohre können dabei minimal 10 mm und maximal 80 mm betragen. Bevorzugt liegen die Außenabmessungen der Rohre zwischen 15 und 50 mm, weiter bevorzugt zwischen 20 und 30 mm. Die Außenabmessungen müssen dabei nicht konstant sein, da mit Vorteil auch ovale Rohre einsetzbar sind. In einem Beispiel beträgt die kleinste Außenabmessung 20 mm und die größte Außenabmessung 30 mm. Die Rohre weisen dabei - wie das Modul insgesamt - vorzugsweise eine Wandstärke von 2 bis 3 mm auf. In besonderen Fällen kann die Wandstärke auch größer ausgebildet werden, beispielsweise bis zu 6 mm.

Es hat sich überraschend herausgestellt, dass ein derartig kompliziertes Bauteil, wie das beschriebene Modul einer Wärmetauscheranordnung einstückig herstellbar ist, insbesondere durch Rotationsformen.

Ein generelles Problem von in einer Ebene angeordneten Wärmetauscheranordnungen besteht darin, dass sie wegen des Abstands zwischen den parallelen Rohren einen erheblichen Flächenbedarf haben und daher beispielsweise bei einer Anordnung auf einer Dachfläche diese sehr ausladend abdecken. In manchen Fällen steht für bestimmte Anwendungszwecke überhaupt keine ausreichende Dachfläche für eine derartige Wärmetauscheranordnung zur Verfügung.

Um bei gleicher Wirksamkeit einen geringeren Flächenbedarf für die Wärmetauscheranordnung entstehen zu lassen, wird erfindungsgemäß vorgeschlagen, dass bei einer Wärmetauscheranordnung der eingangs erwähnten Art zwei Module gegen eine relative Verschiebung zueinander gesichert mit den Sammelrohren übereinander angeordnet sind.

Obwohl Wärmetauscheranordnungen der gattungsgemäßen Art in den genannten Ausführungsformen verwendet worden sind, ist es nicht bekannt, Module übereinander anzuordnen, sodass mehrere Module einen gemeinsamen Flächenbedarf aufweisen, der kleiner ist als das entsprechende Vielfache der des Flächenbedarfs der Einzelmodule. Insbesondere ist es erfindungsgemäß sinnvoll, wenn zwei oder mehrere Module übereinander angeordnet sind, da ihr gemeinsamer Flächenbedarf lediglich dem Flächenbedarf eines einzigen Moduls entspricht, weil die Module konturgenau in Höhenrichtung miteinander fluchten. Auf diese Weise entsteht eine kompakte Wärmetauscheranordnung, die durch die übereinander angeordneten und aneinander anliegenden Sammelrohre einen gemeinsamen sauberen und ästhetisch anspruchsvollen Abschluss bildet. Dabei wird von der Erkenntnis Gebrauch gemacht, dass bei einer Wärmetauscheranordnung der gattungsgemäßen Art der Wärmeübergang zwischen dem äußeren Fluid und dem durch die Rohre strömenden Fluid regelmäßig nicht mit der gewünschten Effektivität erfolgt, wenn das äußere Fluid nur an einer Lage der parallelen Rohre entlang streicht. Es hat sich daher für zahlreiche Anwendungsfälle als vorteilhaft herausgestellt, wenn mehrere Module übereinander angeordnet sind, sodass beispielsweise eine quer zu der Fläche der Module vorbeistreichende Strömung an mehreren Lagen der parallelen Rohre vorbeistreicht. Besonders bevorzugt sind dabei zwei bis fünf, insbesondere drei oder vier Lagen.

In einer bevorzugten Ausführungsform weisen die Sammelrohre wenigstens auf einer Seite des Moduls eine ebene Anlagefläche auf, die oberhalb einer die nebeneinander angeordneten Rohre berührenden virtuellen Oberflächenebene liegt. Dadurch ist es möglich, dass die Anlageflächen der Sammelrohre aneinanderliegen und so eine stabile Verbindung miteinander ausbilden können. Die Sammelrohre können einen quadratischen oder mehreckigen Querschnitt aufweisen, aus dem sich die ebene Anlagefläche automatisch ergibt. Bevorzugt ist jedoch, wenn die Sammelrohre einen kreisförmigen Querschnitt aufweisen für den die ebene Anlagefläche eine Sekante bildet. Eine derartige Ausführungsform eignet sich insbesondere für die bevorzugte Ausbildung der Wärmetauscheranordnung aus einem Kunststoffmaterial. Dabei sind die parallel zueinander verlaufenden Rohre vorzugsweise mit einem ovalen Querschnitt ausgebildet.

Ein Modul einer erfindungsgemäßen Wärmetauscheranordnung kann eine Anzahl n von Sammelrohren aufweisen, zwischen denen (n-1) Gruppen von zueinander parallel laufenden Rohren angeordnet sind. Die Anzahl n kann dabei zweckmäßigerweise zwischen 2 und 4 liegen, sodass eine einzige Gruppe von parallel zueinander verlaufenden Rohren vorhanden ist oder mehrere Gruppen derartiger parallel zueinander verlaufender Rohre in Längsrichtung hintereinander angeordnet sind.

Das mit den parallel zueinander verlaufenden Rohren gebildete Modul weist vorzugsweise in Längsrichtung der Rohre gesehen eine mittige transversale Strebe auf, mittels derer das Modul auf einer Traganordnung befestigbar ist. Die mittige Strebe kann dabei lediglich die Rohre übergreifen oder vorzugsweise selbst als Sammelrohr ausgebildet sein. Die Befestigung an der mittigen Strebe erfolgt dabei vorzugsweise in dem mittleren Bereich der Längsrichtung der mittigen Strebe, sodass das Modul insgesamt in seiner Mitte, beispielsweise an zwei Befestigungspunkten, befestigt ist, die nahe bei einander liegen. Durch diese quasi annähernd punktförmige Befestigungseinrichtung kann der Tatsache Rechnung getragen werden, dass ein aus Kunststoff gebildetes Modul bei stark unterschiedlichen Umgebungstemperaturen erhebliche Längenunterschiede erzeugt, die bei einer mittig, annähernd punktförmigen Befestigung nicht zu großen Spannungen an den Befestigungspunkten führen.

Die Sicherung der erfindungsgemäßen Wärmetauscheranordnung gegen eine relative Verschiebung der Module zueinander kann durch externe Verbindungsmittel erfolgen. Bevorzugt ist jedoch, die Module so auszubilden, dass sie diese Sicherungsmittel bereits in integrierter Form aufweisen. In einer bevorzugten Ausführungsform sind die Sammelrohre mit Nocken in einer Oberfläche und Nockenaufnahmen in der gegenüberliegenden Oberfläche versehen, um die Verschiebesicherung beim flächigen Aufeinanderliegen der Anlagefläche zu gewährleisten.

Es ist dabei vorteilhaft, wenn die Nocken und Nockenaufnahmen jeweils dreh-symmetrisch für eine Drehung um 180° des Moduls um eine senkrecht zu einer von den parallelen Rohren aufgespannten Ebene stehenden Drehachse angeordnet sind. Die Unterseite eines Moduls kann dann auf die Oberseite eines unteren Moduls in zwei um 180° zueinander gedrehten Positionen aufgesetzt werden. In einer besonders bevorzugten Ausführungsform der Erfindung weisen die Sammelrohre Stirnflächen auf, die im montierten Zustand der wenigstens zwei Module übereinander miteinander in Höhenrichtung fluchten und von denen die Rohre der Module einen unterschiedlichen Abstand derart aufweisen, dass die Rohre zweier übereinander liegender Module in einer ersten Verbindungsposition in Höhenrichtung miteinander fluchten und in einer zweiten Verbindungsposition, in der eines der Module um seine Hochachse um 180° gedreht ist, die Rohre der beiden Module auf Lücke zueinander angeordnet sind. Dadurch kann die erfindungsgemäße Wärmetauscheranordnung je nach Anwendungsfall mit in Höhenrichtung zueinander fluchtenden Rohren oder mit jeweils um eine halbe Abstandsbreite zueinander versetzten Rohren ausgebildet werden. Die erstgenannte Ausführungsform ermöglicht ein Durchströmen der Wärmetauscheranordnung mit einem geringen Strömungswiderstand, während die zweite Ausführungsform einen intensiveren Wärmeaustausch bei einem etwas erhöhten Durchströmungswiderstand bietet.

Diese Varianten der Wärmetauscheranordnung sind mit Modulen aufbaubar, die völlig identische Teile sind. Dies ist für die Kunststofffertigung der Module natürlich von großer Bedeutung, da ein einziges Werkzeug für die Herstellung der Module benötigt wird.

Die übereinander angeordneten Module können als eigene Module jeweils einen Zulauf und einen Ablauf aufweisen, können jedoch in einer besonderen Ausführungsform der Erfindung auch, beispielsweise über die Nockenanordnungen, fluidmäßig miteinander verbunden werden, um so in der Gesamtanordnung einen gemeinsamen Zulauf und einen gemeinsamen Ablauf aufzuweisen. In beiden Ausführungsformen kann an beiden Stirnflächen der das jeweilige Modul begrenzenden Sammelrohren ein Zulauf und ein Ablauf konstruktiv vorgesehen sein, der - je nach Anwendungsfall - verschlossen bleiben oder geöffnet werden kann.

Erfindungsgemäß sind die Module einstückig aus Kunststoff hergestellt. Eine derartige einstückige Herstellung des nicht trivial aufgebauten Moduls gelingt durch eine Rotationsform, bei der sich flüssiger Kunststoff in einer Form gleichmäßig an den Wänden der Form verteilt, wenn die Form in allen Freiheitsgraden systematisch bewegt wird, sodass sich beim Abkühlen des Kunststoffs an den Wänden der Form gleichmäßige Wandstärken aus dem abgekühlten Kunststoff ausbilden. Ein derartiges Rotationsformen ist dem Fachmann grundsätzlich bekannt und ermöglicht hier die einstückige Herstellung der Module der Wärmetauscheranordnung.

Die Erfindung soll im Folgenden anhand eines in der Zeichnung dargestellten Ausführungsbeispiels näher erläutert werden. Es zeigen:
- Figur 1: eine perspektivische Darstellung eines Moduls gemäß dem dargestellten Ausführungsbeispiel der Erfindung;
- Figur 2: eine Draufsicht auf das Modul gemäß Figur 1;
- Figur 3: eine Seitenansicht auf das Modul gemäß Figur 2 in Längsrichtung der Rohre, also auf ein Sammelrohr;
- Figur 4: eine Seitenansicht in Querrichtung der parallel zueinander verlaufenden Rohre;
- Figur 5: eine Draufsicht gemäß Figur 2 auf ein Paket aus drei aufeinander angeordneten Modulen;
- Figur 6: einen Schnitt entlang der Linie E-E in Figur 5.

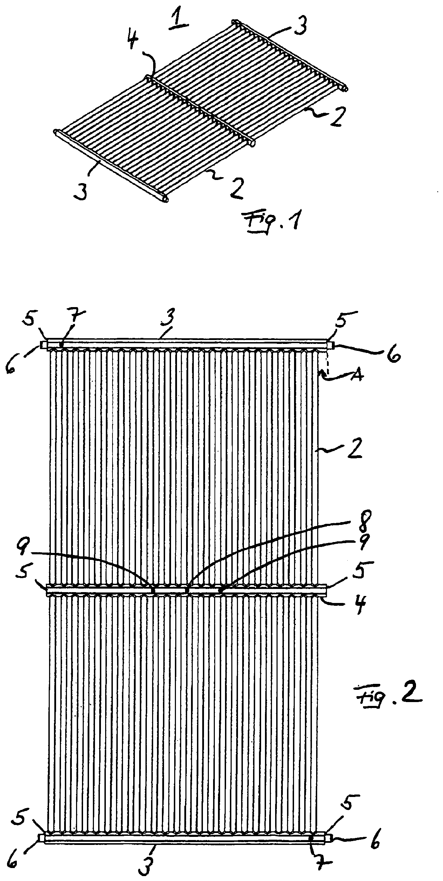

Figur 1 lässt ein einstückig durch Rotationsformen hergestelltes Modul 1 erkennen, das aus zwei Gruppen von parallel und mit Abstand zueinander verlaufenden Rohren 2 besteht, wobei die Rohre zwei jeweils zwischen zwei Sammelrohren 3, 4 verlaufen. Die Sammelrohre 3 bilden dabei End-Sammelrohre, in die die Rohre 2 nur einseitig einmünden, während das Sammelrohr 4 ein mittiges Sammelrohr ist, in das die Rohre 2 von zwei gegenüberliegenden Seiten aus einmünden.

Es ist möglich, das mittige Sammelrohr 4 durch eine mittige Strebe zu ersetzen, die nicht zum Durchströmen mit Fluid aus den Rohren 2 ausgebildet ist, sondern die Rohre 2 die in Figur 1 somit eine doppelte Länge aufweisen würden, mittig lediglich mechanisch zu stabilisieren.

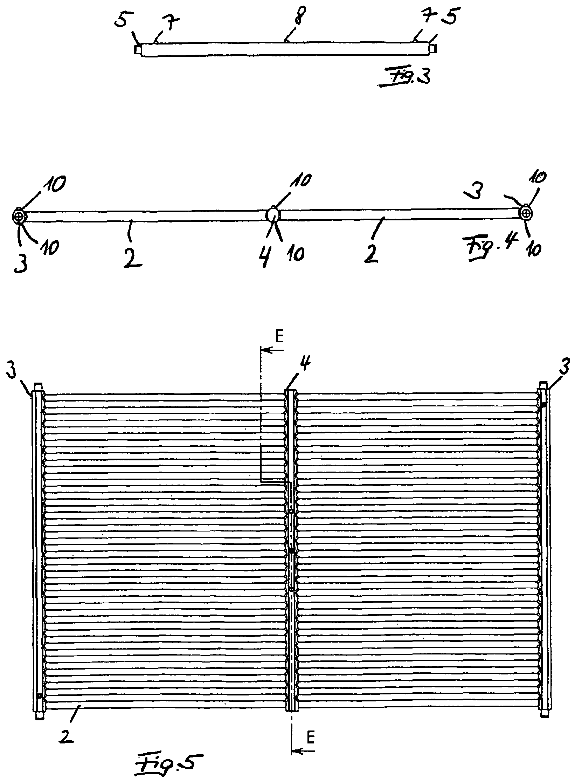

Wie Figur 4 verdeutlicht, ist jedoch die in Figur 1 dargestellte bevorzugte Ausführungsform mit einem mittigen Sammelrohr 4 ausgebildet, in das die Rohre 2 beidseitig einmünden und dass zur Führung von Fluid aus den Rohren 2 vorgesehen und ausgebildet ist.

Figur 2 zeigt eine Draufsicht auf eine Oberseite des Moduls aus Figur 1. Es verdeutlicht, dass die Sammelrohre 3, 4 an jeweils beiden Enden miteinander fluchtende Stirnflächen 5 aufweisen. Bei den End-Sammelrohren 3 ragt aus den Stirnflächen 5 jeweils ein Anschlussstutzen 6 heraus, der zunächst verschlossen ist und bei Bedarf geöffnet werden kann, um so als Zulauf oder als Ablauf für ein Fluid zu dienen. Es ist erkennbar, dass das mittige Sammelrohr 4 einen derartigen Anschlussstutzen 6 nicht aufweist. Die Sammelrohre 3, 4 sind mit jeweils einem aus der Oberfläche nach oben herausragenden Nocken 7, 8 versehen, wobei die Nocken 7 auf den End-Sammelrohren 3 diagonal zueinander angeordnet sind, während der Nocken 8 auf dem mittigen Sammelrohr 4 in der mit der Längsachse des Sammelrohrs 4 angeordnet ist. Die Sammelrohre 3, 4 weisen an den identischen Stellen an ihrer Unterseite jeweils entsprechende (in Figur 2 nicht dargestellte) Nockenaufnahmen auf. Wie noch näher erläutert wird, ist die Anordnung der Nocken 7, 8 drehsymmetrisch um die durch den mittigen Nocken 8 verlaufende Hochachse, sodass das in Figur 2 dargestellte Modul 1 auf die Oberseite eines identischen Moduls 1 in der dargestellten Stellung, aber auch in einer um 180° um die Hochachse durch den Nocken 8 gedrehte Stellung auflegbar ist.

Figur 2 verdeutlicht noch, dass die Rohre 2 jeweils einen gleichen Abstand zueinander aufweisen, dass aber der Stirnfläche 5 am in Figur 2 rechten Ende der Sammelrohre 3, 4 zur Stirnfläche 5 einen gewissen Abstand A aufweist, der sich auf der anderen (in der Zeichenebene der Figur 2 linken) Seite nicht findet. Der Abstand A entspricht dabei einer halben Rohrbreite, wenn das Endrohr 2 auf der anderen Seite mit der Stirnfläche 5 fluchtend abschließt. Wird auch hier ein kleiner Abstand ausgebildet, entspricht der Abstand A dem kleinen Abstand zuzüglich der halben Abstandsbreite zwischen den Rohren 2.

Figur 3 verdeutlicht, dass die Nocken 7 demgegenüber einen gleichen Abstand von den zugehörigen Stirnflächen 5 aufweisen. Demgemäß schließen die Stirnflächen 5 immer fluchtend miteinander ab, unabhängig davon, ob das Modul 1 in Figur 2 in der dargestellten ersten Montageposition oder in einer um 180° um die Hochachse durch den Nocken 8 gedrehten zweiten Montageposition auf ein unteres Modul 1 aufgelegt ist.

Figur 2 lässt ferner noch zwei Durchgangslöcher 9 erkennen, die symmetrisch zu dem mittleren Nocken 8 des mittleren Sammelrohrs 4 angeordnet sind und der Befestigung des Moduls auf einer Tragkonstruktion dienen. Die Durchgangslöcher sind mit einem Abstand zueinander angeordnet, der weniger als 1/3 der Breite des Moduls 1 entspricht, sodass zwar eine verdrehsichere Befestigung möglich ist, jedoch Auswirkungen aufgrund von Längenänderungen des Materials des Moduls auf die Befestigungseinrichtungen, die durch die Durchgangsöffnungen 9 ragen, gering gehalten werden.

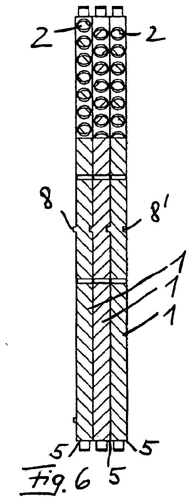

Figur 5 zeigt eine Draufsicht auf eine Modulanordnung mit drei Modulen 1, bei der Zwischenräume zwischen den Rohren 2 nicht zu erkennen sind, weil die Zwischenräume zwischen den Rohren 2 durch Rohre einer unteren Lage aus-gefüllt sind. Dies wird durch die Schnittdarstellung in Figur 6 verdeutlicht. Die Schnittdarstellung zeigt drei Module 1, die flächig aufeinander gelegt sind, weil ihre Sammelrohre 3, 4, die mit einem an sich kreisförmigen Querschnitt ausgebildet sind, sowohl an der Oberseite als auch an der Unterseite eine abgeflachte Anlagefläche 10 aufweisen, wie sie insbesondere in Figur 4 erkennbar ist. Die Anlageflächen 10 schneiden daher den Querschnitt nach Art einer Sekante.

Figur 6 lässt die mittigen Nocken 8 an der Oberseite der Module 1 erkennen, die in entsprechende Nockenaufnahmen 8' auf der Unterseite der Module eingreifen. In entsprechender Weise greifen die Nocken 7 in entsprechende (nicht dargestellte) Nockenaufnahmen ein, und zwar unabhängig davon, ob das Modul 1 auf ein unteres Modul in der ersten oder in der zweiten Montageposition aufgelegt ist.

Figur 6 zeigt, ein oberes Modul 1, das gegenüber den beiden unteren Modulen 1 um 180° um die Achse durch den Nocken 8 gedreht aufgelegt ist, sodass die Rohre 2 gegenüber den Rohren 2 der unteren Module 1 um eine halbe Abstandsbreite versetzt angeordnet sind, sich also jeweils auf Lücke zu den Rohren 2 des darunterliegenden Moduls 1 befinden. Hingegen sind die beiden unteren Module 1 in der gleichen Montageposition angeordnet, sodass die Rohre 2 der beiden unteren Module 1 miteinander fluchtend ausgerichtet sind.

Figur 6 lässt ferner erkennen, dass die Rohre 2 einen ovalen Querschnitt aufweisen, bei dem sich die längere Achse in Hochrichtung des Moduls 1 befindet und die kürzere Achse in Querrichtung. Hierdurch wird ein Durchströmen des Pakets aus Modulen 1 von unten nach oben (in Figur 6 von rechts nach links) und das dabei entstehende Vorbeistreichen an der Oberfläche der Rohre 2 optimiert.

Figur 6 lässt ferner erkennen, dass sowohl die beiden unteren Module 1 als auch das darauf liegende Modul 1, das in der anderen Montageposition aufgelegt ist, mit den Stirnflächen 5 der Sammelrohre 3, 4 miteinander fluchten, sodass - unabhängig von der gewählten Montageposition - ein kompaktes und ansehnliches Erscheinungsbild des aus den gestapelten Modulen 1 gebildeten Wärmetauschers gewährleistet ist.

In einem bevorzugten Anwendungsfall werden vier Module 1 zu einem Modulpaket miteinander verbunden, vier Modulpakete flächig nebeneinander angeordnet, sodass 16 Module 1 mit einem Flächenbedarf von vier Modulen 1 verwendet werden. Die Fluidverbindung der Modulpakete miteinander erfolgt über entsprechend ausgewählte Anschlussstutzen 6 einzelner Module 1.

## Patentansprüche

1. Wärmetauscheranordnung gebildet mit einem eine Fläche bildenden Modul (1), in dem eine Vielzahl von wenigstens fünf parallel und mit Abstand zueinander angeordnete, von einem Fluid durchströmbare Rohre (2) zwischen zwei ebenfalls von dem Fluid durchströmbaren transversalen Sammelrohren (3, 4) verlaufen, wobei wenigstens eins der Sammelrohre (3, 4) einen Anschluss (6) für einen Zulauf oder Ablauf des Fluids aufweist und das Modul (1) zum Durchströmen von einem quer zu seiner Fläche durch den Abstand der Rohre (2) zueinander vorbeistreichenden äußeren Fluid ausgebildet ist, **dadurch gekennzeichnet, dass** das Modul (1) als ein einstückig im Rotationsformverfahren hergestelltes Kunststoffteil ausgebildet ist.

2. Wärmetauscheranordnung nach Anspruch 1, **dadurch gekennzeichnet, dass** wenigstens zwei Module (1) gegen eine relative Verschiebung zueinander gesichert mit den Sammelrohren (3, 4) übereinander angeordnet sind.

3. Wärmetauscheranordnung nach Anspruch 2, **dadurch gekennzeichnet, dass** die Sammelrohre (3, 4) wenigstens auf einer Seite des Moduls eine ebene Anlagefläche (10) aufweisen, die oberhalb einer die nebeneinander angeordneten Rohre (2) berührenden virtuellen Oberflächenebene liegt.

4. Wärmetauscheranordnung nach einem der Ansprüche 1 oder 3, **dadurch gekennzeichnet, dass** die Rohre (2) einen ovalen Querschnitt aufweisen.

5. Wärmetauscheranordnung nach einem der Ansprüche 1 bis 4, **dadurch gekennzeichnet, dass** die Sammelrohre (3, 4) einen kreisförmigen oder ovalen Querschnitt aufweisen, für den die ebene Anlagefläche (10) eine Sekante bildet.

6. Wärmetauscheranordnung nach einem der Ansprüche 1 bis 5, **dadurch gekennzeichnet, dass** ein Modul (1) eine Anzahl n von Sammelrohren aufweist, zwischen denen (n-1) Gruppen von zueinander parallel laufenden Rohren (2) angeordnet sind.

7. Wärmetauscheranordnung nach einem der Ansprüche 1 bis 6, **dadurch gekennzeichnet, dass** das Modul (1) eine mittige transversale Strebe aufweist, mittels derer das Modul (1) auf einer Traganordnung befestigbar ist.

8. Wärmetauscheranordnung nach Anspruch 7, **dadurch gekennzeichnet, dass** die mittige Strebe durch ein mittiges Sammelrohr (4) gebildet ist.

9. Wärmetauscheranordnung nach einem der Ansprüche 1 bis 8, **dadurch gekennzeichnet, dass** die Sammelrohre (3, 4) Nocken (8) in einer Oberfläche und Nockenaufnahmen (8') in der gegenüberliegenden Oberfläche zur Verschiebesicherung beim flächigen Aneinanderliegen der Anlageflächen (10) zweier Module (1) aufweisen.

10. Wärmetauscheranordnung nach Anspruch 9, **dadurch gekennzeichnet, dass** die Nocken (8) und Nockenaufnahmen (8') jeweils drehsymmetrisch für eine Drehung um 180° des Moduls (1) um eine senkrecht zu einer von den parallelen Rohren (2) aufgespannten Ebene stehenden Drehachse angeordnet sind.

11. Wärmetauscheranordnung nach einem der Ansprüche 2 bis 10, **dadurch gekennzeichnet, dass** die Sammelrohre (3, 4) Stirnflächen (5) aufweisen, die im montierten Zustand der wenigstens zwei Module (1) übereinander miteinander in Höhenrichtung fluchten.

12. Wärmetauscheranordnung nach Anspruch 11, **dadurch gekennzeichnet, dass** die Rohre (2) der Module (1) von den Stirnflächen (5) einen unterschiedlichen Abstand aufweisen, sodass die Rohre (2) zweier übereinanderliegender Module in einer ersten Verbindungsposition in Höhenrichtung miteinander fluchten und in einer zweiten Verbindungsposition, in der eines der Module (1) um seine Hochachse um 180° gedreht ist, die Rohre (2) der beiden Module (1) auf Lücke zueinander angeordnet sind.

13. Wärmetauscheranordnung nach einem der Ansprüche 2 bis 12, **dadurch gekennzeichnet, dass** die Module (1) identische Teile sind.

14. Wärmetauscheranordnung nach einem der Ansprüche 2 bis 13, **dadurch gekennzeichnet, dass** wenigstens zwei aneinander angrenzende Module (1) fluidmäßig miteinander verbunden sind und einen gemeinsamen Zulauf und einen gemeinsamen Ablauf aufweisen.

## Claims

1. Heat exchanger arrangement having a multiplicity of at least five tubes (2) which are arranged in parallel and at a spacing from one another in a module (1) which forms a surface, through which tubes (2) a fluid flows, and which tubes (2) run between two transversal collector tubes (3, 4) which can likewise be flowed through by the fluid, at least one of the collector tubes (3, 4) having at least one connector (6) for an inflow or outflow of the fluid, and the module (1) being configured for the throughflow of external fluid which sweeps past transversely with respect to the surface of the said module (1), **characterized in that** the module (1) is configured as a plastic part which is produced integrally using the rotational moulding method.

2. Heat exchanger arrangement according to Claim 1, **characterized in that** at least two modules (1) are arranged above one another with the collector tubes (3, 4) such that they are secured against a relative displacement with respect to one another.

3. Heat exchanger arrangement according to Claim 2, **characterized in that** the collector tubes (3, 4) have a planar bearing face (10) at least on one side of the module, which bearing face (10) lies above a virtual surface plane which touches the tubes (2) which are arranged next to one another.

4. Heat exchanger arrangement according to either of Claims 1 or 3, **characterized in that** the tubes (2) have an oval cross section.

5. Heat exchanger arrangement according to one of Claims 1 to 4, **characterized in that** the collector tubes (3, 4) have a circular or oval cross section, for which the planar bearing face (10) forms a secant.

6. Heat exchanger arrangement according to one of Claims 1 to 5, **characterized in that** a module (1) has a number n of collector tubes, between which (n-1) groups of tubes (2) which run parallel to one another are arranged.

7. Heat exchanger arrangement according to one of Claims 1 to 6, **characterized in that** the module (1) has a central transversal strut, by means of which the module (1) can be fastened on a support arrangement.

8. Heat exchanger arrangement according to Claim 7, **characterized in that** the central strut is formed by a central collector tube (4).

9. Heat exchanger arrangement according to one of Claims 1 to 8, **characterized in that** the collector tubes (3, 4) have cams (8) in a surface and cam receptacles (8') in the opposite surface for securing against displacement when the bearing faces (10) of two modules (1) lie flatly on one another.

10. Heat exchanger arrangement according to Claim 9, **characterized in that** the cams (8) and cam receptacles (8') are arranged in each case rotationally symmetrically for a rotation by 180° of the module (1) about a rotational axis which lies perpendicularly with respect to a plane which is defined by the parallel tubes (2) .

11. Heat exchanger arrangement according to one of Claims 2 to 10, **characterized in that** the collector tubes (3, 4) have end faces (5) which are flush with one another in the vertical direction in the assembled state of the at least two modules (1) above one another.

12. Heat exchanger arrangement according to Claim 11, **characterized in that** the tubes (2) of the modules (1) are at a different spacing from the end faces (5), with the result that the tubes (2) of two modules which lie above one another are flush with one another in the vertical direction in a first connecting position, and the tubes (2) of the two modules (1) are arranged staggered with respect to one another in a second connecting position, in which one of the modules (1) is rotated by 180° about its vertical axis.

13. Heat exchanger arrangement according to one of Claims 2 to 12, **characterized in that** the modules (1) are identical parts.

14. Heat exchanger arrangement according to one of Claims 2 to 13, **characterized in that** at least two modules (1) which adjoin one another are connected fluidically to one another and have a common inflow and a common outflow.

## Revendications

1. Agencement échangeur de chaleur comprenant une pluralité d'au moins cinq tubes (2) agencés parallèlement et à distance les uns des autres dans un module (1) formant une surface, à travers lesquels s'écoulent un fluide et s'étendant entre deux tubes collecteurs transversaux (3, 4) également susceptibles d'être traversés par le fluide, dans lequel au moins un des tubes collecteurs (3, 4) comporte au moins un raccord (6) pour une arrivée ou une sortie de fluide, et dans lequel le module (1) est réalisé pour être traversé par un fluide extérieur qui le lèche en passant transversalement à sa surface,
**caractérisé en ce que** le module (1) est réalisé comme une pièce en matière plastique produite d'un seul tenant dans une procédure de moulage-rotation.

2. Agencement échangeur de chaleur selon la revendication 1, **caractérisé en ce qu'**au moins deux modules (1) sont agencés de manière assurée à l'encontre d'un déplacement relatif l'un par rapport à l'autre avec les tubes collecteurs (3, 4) l'un au-dessus de l'autre.

3. Agencement échangeur de chaleur selon la revendication 2, **caractérisé en ce que** les tubes collecteurs (3, 4) présentent sur au moins un côté du module une surface d'appui plane (10) qui est située au-dessus d'un plan de surface virtuel qui touche les tubes (2) agencés les uns à côté des autres.

4. Agencement échangeur de chaleur selon l'une des revendications 1 ou 3, **caractérisé en ce que** les tubes (2) ont une section ovale.

5. Agencement échangeur de chaleur selon l'une des revendications 1 à 4, **caractérisé en ce que** les tubes collecteurs (3, 4) ont une section circulaire ou ovale pour laquelle la surface d'appui plane (10) forme une sécante.

6. Agencement échangeur de chaleur selon l'une des revendications 1 à 5, **caractérisé en ce qu'**un module (1) comprend un nombre n de tubes collecteurs, entre lesquels sont agencés (n-1) groupes de tubes (2) s'étendant parallèlement les uns aux autres.

7. Agencement échangeur de chaleur selon l'une des revendications 1 à 6, **caractérisé en ce que** le module (1) comprend une entretoise transversale médiane, au moyen de laquelle le module (1) est susceptible d'être fixé sur un agencement porteur.

8. Agencement échangeur de chaleur selon la revendication, **caractérisé en ce que** l'entretoise médiane est formée par un tube collecteur médian (4).

9. Agencement échangeur de chaleur selon l'une des revendications 1 à 8, **caractérisé en ce que** les tubes collecteurs (3, 4) présentent des cames (8) dans une surface, et des logements de came (8') dans la surface opposée, pour le blocage antidéplacement lorsque les surfaces d'appui (10) de deux modules (1) sont posées l'une contre l'autre sur toute leur surface.

10. Agencement échangeur de chaleur selon la revendication 9, **caractérisé en ce que** les cames (8) et les logements de came (8') sont agencés respectivement à symétrie de révolution pour une rotation de 180° du module (1) autour d'un axe de rotation dressé perpendiculairement à un plan défini par les tubes parallèles (2).

11. Agencement échangeur de chaleur selon l'une des revendications 2 à 10, **caractérisé en ce que** les tubes collecteurs (3, 4) présentent des surfaces frontales (5) qui, dans l'état monté desdits au moins deux modules (1) l'un au-dessus de l'autre, sont alignées l'une avec l'autre dans la direction en hauteur.

12. Agencement échangeur de chaleur selon la revendication 11, **caractérisé en ce que** les tubes (2) du module (1) présentent depuis les surfaces frontales (5) une distance différente, de sorte que dans une première position de liaison les tubes (2) de deux modules situés l'un au-dessus de l'autre sont alignés l'un avec l'autre dans la direction en hauteur, et que, dans une seconde position de liaison dans laquelle l'un des modules (1) est tourné de 180° autour de son axe vertical, les tubes (2) des deux modules (1) sont agencés en quinconce les uns par rapport aux autres.

13. Agencement échangeur de chaleur selon l'une des revendications 2 à 12, **caractérisé en ce que** les modules (1) sont des pièces identiques.

14. Agencement échangeur de chaleur selon l'une des revendications 2 à 13, **caractérisé en ce qu'**au moins deux modules (1) adjacents l'un à l'autre sont reliés l'un à l'autre sur le plan fluidique et présentent une arrivée commune et une sortie commune.
